Europäisches Patentamt

European Patent Office

Office européen des brevets

(11) Veröffentlichungsnummer: **0 313 507 B1**

(19)

(12) **EUROPÄISCHE PATENTSCHRIFT**

(45) Veröffentlichungstag der Patentschrift: **29.12.93**

(21) Anmeldenummer: **88710039.4**

(22) Anmeldetag: **19.10.88**

(51) Int. Cl.⁵: **C08F 265/04**, //(C08F265/04, 214:06)

(54) **Verfahren zur Herstellung eines Acrylsäureester-Vinylchlorid-Pfropfpolymerisates.**

(30) Priorität: **23.10.87 DE 3735925**

(43) Veröffentlichungstag der Anmeldung:
**26.04.89 Patentblatt 89/17**

(45) Bekanntmachung des Hinweises auf die
Patenterteilung:
**29.12.93 Patentblatt 93/52**

(84) Benannte Vertragsstaaten:
**BE DE FR GB IT NL**

(56) Entgegenhaltungen:
**EP-A- 0 195 942**
**FR-A- 2 119 515**
**FR-A- 2 350 361**
**LU-A- 53 951**

**WPI, FILE SUPPLIER, AN=72-16356T, Derwent
Publications Ltd, London, GB; & JP-A-47 007
454 (DAI NIPPON INK)**

(73) Patentinhaber: **HOECHST AKTIENGESELL-
SCHAFT**

**D-65926 Frankfurt(DE)**

(72) Erfinder: **Klippert, Heinz, Dr.**
**Hochfellnstrasse 14**
**D-8269 Burgkirchen(DE)**
Erfinder: **Engelmann, Manfred, Dr.**
**Kantstrasse 5**
**D-8269 Burgkirchen(DE)**

**Beschreibung**

Die Erfindung betrifft ein Verfahren zur Herstellung eines Pfropfpolymerisates, das polymerisierte Einheiten des Vinylchlorids und 30 bis 60 Gew.-%, bezogen auf das Polymerisat, polymerisierte Einheiten mindestens eines Acrylsäureesters enthält, gemäß Anspruch 1.

Es ist bekannt, schlagzähe, witterungsstabile Formkörper aus Mischungen von Polyvinylchlorid und Pfropfpolymerisaten, die 30 bis 60 Gew.-% Acrylsäureestereinheiten und Vinylchlorid als aufpolymerisiertes Monomeres enthalten, herzustellen. Zur Gewinnung solcher Pfropfpolymerisate ist es aus DE-OS 21 62 615 bekannt, Acrylsäureester in Gegenwart kleiner Mengen polyfunktioneller, ethylenisch ungesättigter Monomerer in wäßriger Emulsion zu polymerisieren, der so erzeugten Polymerdispersion Vinylchlorid, ein für die Suspensionspolymerisation von Vinylchlorid geeignetes Suspendiermittel und einen in Vinylchlorid löslichen Katalysator, zuzusetzen, den pH auf 3 bis 9 einzustellen und diese Mischung zu polymerisieren. Zur Emulsionspolymerisation des Acrylsäureesters soll ein Emulgator mit einem niedrigen (2 bis 12) oder sehr hohen (über 40) HLB-Wert eingesetzt werden, beispielsweise das Natriumsalz des Sulfobernsteinsäure-bistridecylesters (HLB = 4 bis 7) oder ein Alkylsulfatsalz mit kurzer Alkylkette, beispielsweise Natrium-2-ethylhexylsulfat (HLB ~ 50). Um bei der anschließenden Polymerisation des Vinylchlorids Belagsbildung zu vermeiden, wird vorzugsweise eine hochviskose Hydroxypropyl-Methylcellulose eingesetzt.

Dieses Verfahren hat den Nachteil, daß die empfohlenen hochviskosen Suspendiermittel schwer handhabbar sind, die üblichen Produktionsanlagen für Polyvinylchlorid sind auf so hochviskose Stoffe nicht eingerichtet. Der nachfolgend beschriebene Vergleichsversuch zeigt ferner, daß bei Zusatz von einem Emulgator mit hohem HLB-Wert (circa 40) bei der Polymerisation des Acrylsäureesters nach der anschließenden Pfropfpolymerisation mit Vinylchlorid ein Polymerisat erhalten wird, das ungünstige Porosität und damit schlechte Entgasbarkeit aufweist und das in Mischung mit Polyvinylchlorid zu Formkörpern verarbeitet, vergleichsweise geringe Schlagzähigkeit sowie schlechtere Oberfläche und Verarbeitbarkeit zeigt.

Aus DE 35 10 899-A1 ist ein Verfahren bekannt, bei dem die Emulsionspolymerisation eines Acrylsäureesters in Gegenwart eines Alkalisalzes einer Fettsäure oder in Gegenwart von Alkali-Laurylsulfat durchgeführt wird und die anschließende Suspensionspolymerisation des Vinylchlorids in Gegenwart einer Methylcellulose erfolgt, wobei nach der Suspendiermittelzugabe eine $Ca(OH)_2$-Suspension zugefügt, die Mischung neutralisiert und dann ein organisches Peroxid als Initiator zugegeben wird. Nach den erfindungsgemäßen Beispielen wird wäßrige Suspendiermittellösung und Polyacrylatdispersion vorgelegt, dann Vinylchlorid zugegeben, aufgeheizt, $Ca(OH)_2$-Suspension zugefahren, mit Säure neutralisiert und zuletzt der Initiator eindosiert.

Diese Verfahrensweise ist kompliziert und störanfällig. Offensichtlich kann nur mit einem ungünstigen Phasenverhältnis (5 Gew.-Teile Wasser auf 1 Gew.-Teil Vinylchlorid) gefahren werden, worunter die Produktivität leidet. Ferner kann die Dosierung des Initiators in organischem Lösungsmittel (Toluol) Rückstandsprobleme im fertigen Polymerisat beziehungsweise dem daraus erzeugten Formkörper verursachen. Das erzielte Schüttgewicht von 450 g/dm$^3$ ist für eine moderne Extrusionsverarbeitung unbefriedigend niedrig.

Schließlich ist aus JP-AS Sho 47-7454 ein Verfahren zur Verbesserung der Herstellung granulierter Polymerer bekannt, das sich nicht speziell auf Polyacrylsäureester-Vinylchlorid-Pfropfpolymerisate bezieht. Hiernach wird eine wäßrige Suspension aus einem Monomeren der Ethylenreihe einem Suspendiermittel und einem Aussalzmittel, das zur Coagulation eines Latex geeignet ist und die Suspension des Monomeren nicht stört, mit einem nach Bedarf basisch eingestellten Polymerlatex versetzt und die so erzeugte Mischung polymerisiert. In keinem der Beispiele wird ein Polyacrylsäureester-Latex eingesetzt.

Es wurde nun ein Verfahren gefunden, das die Nachteile der obengenannten Verfahren nicht aufweist und mit guter Produktivität und wenig störanfälliger Verfahrensweise zu Produkten mit verbesserten Eigenschaften führt. Das neue Verfahren zur Herstellung eines Polymerisates, das polymerisierte Einheiten des Vinylchlorids und 30 bis 60 Gew.-%, bezogen auf das Polymerisat, polymerisierte Einheiten mindestens eines Acrylsäureesters sowie gegebenenfalls weiterer mit Acrylsäureester copolymerisierbarer Monomerer enthält, durch Polymerisation des Acrylsäureesters und gegebenenfalls weiterer Monomerer unter Zusatz eines Monomeren mit mindestens zwei ethylenisch ungesättigten, nicht konjugierten Doppelbindungen in wäßriger Emulsion, in Gegenwart eines wasserlöslichen Salzes einer 12 bis 18 C-Atome enthaltenden Fettsäure als Emulgator mit einem Ausgangs-pH-Wert über 9, wobei ein Polymeres gebildet wird, dessen Glasumwandlungstemperatur unterhalb 0 °C liegt, mit anschließender Polymerisation von Vinylchlorid, gegebenenfalls zusammen mit Vinylchlorid copolymerisierbaren Monomeren in wäßriger Suspension in Gegenwart der durch Emulsionspolymerisation erzeugten Polyacrylsäureesterdispersion, sowie von mindestens einem radikalbildenden, in Vinylchlorid löslichen Katalysator, mindestens einem Suspendiermittel und mindestens einem Fällungsmittel für den genannten Emulgator bei Temperaturen von 50 bis 80 °C, Abkühlen, Entspannen und Aufarbeiten zum trockenen Polymerisat, ist dadurch gekennzeichnet, daß die Emulsionspolymerisation des Acrylsäureesters zusätzlich in Gegenwart mindestens eines Alkali- oder Ammoniumsalzes einer Alkylsulfonsäure mit 8 bis 20 C-Atomen und/oder einer Alkylarylsulfonsäure mit 3 bis 16 C-Atomen im Alkylrest als weiterem Emulgator vorgenommen wird und vor Beginn der Suspensionspolymerisation des Vinylchlorids Wasser, Suspendiermittel, Fällungsmittel für die genannten Emulgatoren, Katalysator und gegebenenfalls weitere Zusatzsstoffe sowie Vinylchlorid und gegebenenfalls weitere Monomere im Polymerisationsgefäß vorgelegt werden und danach die vorher erzeugte Dispersion des Polyacrylsäureesters zugegeben und die Mischung auf Polymerisationstemperatur erwärmt wird.

Die erfindungsgemäße Herstellung des Polymerisates erfolgt in zwei Schritten. Zunächst wird mindestens ein Acrylsäureester sowie gegebenenfalls weitere mit Acrylsäureester copolymerisierbare Monomere unter Zusatz eines Monomeren mit mindestens zwei ethylenisch ungesättigten, nicht konjugierten Doppelbindungen in wäßriger Emulsion polymerisiert. Als Acrylsäureester sind beispielsweise Acrylsäurealkylester, die 3 bis 10 C-Atome in Alkylrest enthalten, geeignet, wie zum Beispiel Propylacrylat, Butylacrylat, Pentylacrylat, Hexylacrylat, Heptylacrylat, Octylacrylat, 2-Ethylhexylacrylat, Nonylacrylat oder Decylacrylat, ferner Acrylsäurearylalkylester, beispielsweise der Benzyl- oder Phenylpropylester, geeignet sind auch solche Arylalkylester, bei denen die Kohlenstoffkette durch Ethersauerstoffatome unterbrochen ist, beispielsweise der Acrylsäurephenoxyethoxyethylester. Bevorzugt werden solche Acrylester verwendet, deren Homopolymerisate eine Glasumwandlungstemperatur von höchstens -15 °C zeigen. Es können auch Mischungen verschiedener Acrylsäureester verwendet werden.

Geeignete, mit Acrylsäureestern copolymerisierbare Monomere sind beispielsweise Styrol, Acrylnitril, Vinylacetat, Methacrylsäurealkylester mit 1 bis 8 C-Atomen in der Alkylgruppe, Acrylsäure, Methacrylsäure und andere übliche Vinylmonomere. Bevorzugt wird als Comonomeres Vinylidenchlorid verwendet. Die Menge des beziehungsweise der mit dem Acrylsäureester copolymerisierbaren Monomeren soll so gewählt werden, daß das erzeugte Acrylsäureestercopolymerisat eine Glasumwandlungstemperatur unterhalb 0 °C aufweist.

Die Emulsionspolymerisation des Acrylsäureesters erfolgt unter Zusatz eines Monomeren mit mindestens zwei ethylenisch ungesättigten, nicht konjugierten Doppelbindungen. Solche geeigneten Verbindungen sind beispielsweise Acrylate mehrwertiger Alkohole, wie Ethylenglykoldimethacrylat, Diethylenglykoldimethacrylat, Propylenglykoldimethacrylat, Butylenglykoldiacrylat, Trimethylenglykoldiacrylat, Pentamethylenglykoldiacrylat, Glyceryltriacrylat, Trimethylolpropantrimethacrylat, Pentaerythrittetraacrylat; Allylmethacrylat, Diallylester von mono- beziehungsweise polyfunktionellen Säuren, wie Diallylphthalat, Diallylfumarat; Divinylester von zwei- oder dreibasigen Säuren, wie Divinyladipat; Divinylether von mehrwertigen Alkoholen, beispielsweise vom Ethylenglykol; Divinylbenzol oder Divinylsulfon. Von diesen Verbindungen mit zwei nicht konjugierten ethylenischen Doppelbindungen werden 0,1 bis 5 Gew.-%, bezogen auf die acrylsäureesterhaltige Monomerenmischung, für die Emulsionspolymerisation eingesetzt.

Diese Polymerisation in wäßriger Emulsion findet in Gegenwart von mindestens einem wasserlöslichen Salz einer 12 bis 18 C-Atome enthaltenden Fettsäure statt. Das Salz sollte mindestens zu0,5 Gew.-% in Wasser bei 20 °C löslich sein, vorzugsweise werden die Natrium- oder Ammoniumsalze eingesetzt. Geeignet sind beispielsweise die Laurate, Myristate, Palmitate, Isopalmitate oder Stearate, wobei auch Mischungen verschiedener fettsaurer Salze verwendet werden können.

Zusätzlich zu den fettsauren Salzen wird erfindungsgemäß in Gegenwart mindestens eines Alkali- oder Ammoniumsalzes einer Alkysulfonsäure mit 8 bis 20 C-Atomen und/oder einer Alkylarylsulfonsäure mit 3 bis 16 C-Atomen im Alkylrest polymerisiert. Wegen ihrer leichten Beschaffbarkeit sind die Dodecylbenzolsulfonate oder Dibutylnaphthalinsulfonate sowie Alkylsulfonate mit 11 bis 18 C-Atomen, die als Mischung vorliegen können, bevorzugt. Von den genannten Sulfonaten werden 0,05 bis 1 Gew.-%, vorzugsweise 0,1 bis 0,3 Gew.-% bezogen auf Vinylchlorid beziehungsweise Vinylchloridmonomerengemisch, das bei der nachfolgenden Suspensionspolymerisation in Gegenwart der Polyacrylsäuredispersion verwendet wird, eingesetzt.

Bezogen auf 1 Gew.-Teil Sulfonat werden bei der Emulsionspolymerisation des Acrylsäureesters 1 bis 15 Gew.-Teile, vorzugsweise 8 bis 3 Gew.-Teile des fettsauren Salzes beziehungsweise der fettsauren Salze verwendet, wobei die Mindestmenge an fettsaurem Salz, bezogen auf das Acrylsäureester enthaltende Monomerengemisch, mindestens 1 Gew.-% betragen soll.

Als Katalysator oder Initiator für die Emulsionspolymerisation werden 0,05 bis 1 Gew.-%, vorzugsweise 0,2 bis 0,5 Gew.-%, bezogen auf das acrylsäureesterhaltige Monomerengemisch, von üblichen peroxidischen Verbindungen wie Wasserstoffperoxid, Kalium- oder Ammoniumpersulfat oder von Azokatalysatoren, beispielsweise Azoisobuttersäurenitril oder Azobisdimethylvaleronitril verwendet. Zusammen mit den wasserlöslichen peroxidischen Verbindungen können wasserlösliche reduzierende Verbindungen, die zum Aufbau eines Redox-Katalysatorsystems geeignet sind, eingesetzt werden. Geeignet sind beispielsweise Alkalibisulfite, -hydrosulfite, -tiosulfate, -aldehydsulfoxylate sowie auch organische reduzierende Verbindungen, beispielsweise Ascorbinsäure.

Vor Beginn der Emulsionspolymerisation des Acrylsäureestergemisches wird der pH der Polymerisationsmischung auf einen Wert über 9, beispielsweise mit Ammoniumhydroxidlösung oder Alkalilauge, eingestellt. Die Polymerisation findet bei 40 bis 90 °C zweckmäßig unter normalen Atmosphärendruck bis zu einem Monomerumsatz von mindestens 99 %, vorzugsweise 99,8 %, statt, wozu im allgemeinen 2 bis 10 Stunden benötigt werden.

Diese Emulsionspolymerisation kann kontinuierlich oder chargenweise durchgeführt werden, vorzugsweise arbeitet man nach der, beispielsweise in Houben-Weyl "Methoden der organischen Chemie", Band 14, Teil 1, Seite 339, beschriebenen halbkontinuierlichen Methode, wobei ein kleinerer Teil der Monomerdispersion vorgelegt, die Polymerisation gestartet und während der Polymerisation sowohl wäßrige Monomerdispersion wie auch Katalysator beziehungsweise Initiator nachgeschleust werden.

Die wie oben beschrieben hergestellte wäßrige Polyacrylsäureesterdispersion wird anschließend für eine Suspensionspolymerisation von Vinylchlorid beziehungsweise eines vinylchloridhaltigen Monomerengemisches verwendet. Hierbei wird erfindungsgemäß so vorgegangen, daß Wasser, Suspendiermittel, Fällungsmittel für die weiter oben beschriebenen Emulgatoren, Katalysatoren, gegebenenfalls weitere Zusatzstoffe, sowie Vinylchlorid und gegebenenfalls weitere Monomere, die mit Vinylchlorid copolymerisierbar sind, im Polymerisationsgefäß vorgelegt werden und danach die, wie oben beschrieben hergestellte wäßrige Dispersion des Polyacrylsäureesters unter Bewegung der Mischung, beispielsweise durch Rühren, zugegeben wird. Hierbei kann die Reihenfolge, in der das Vinylchlorid beziehungsweise das Vinylchlorid enthaltende Monomerengemisch, das Wasser, Suspendiermittel, Fällungsmittel und der Katalysator eingespeist werden, variieren, in jedem Fall soll jedoch als letztes die wäßrige Polyacrylsäuredispersion zugegeben werden. Vor, während oder nach dieser Zugabe wird die Mischung auf die Polymerisationstemperatur von 50 bis 80 °C erwärmt und wie üblich unter Rühren bis zu einem Druckabfall um mindestens 0,1 MPa polymerisiert. Der Polymerisationsumsatz sollte 45 bis 90 Gew.-%, vorzugsweise 70 bis 80 Gew.-%, bezogen auf eingesetztes Vinylchloridmonomeres, betragen.

Bei der Suspensionspolymerisation wird zweckmäßig auf 1 Gew.-Teil Vinylchlorid beziehungsweise vinylchloridhaltiges Monomerengemisch 1 bis 5 Gew.-Teile, vorzugsweise 1,5 bis 3 Gew.-Teile Wasser verwendet, wobei die später zugefügte Polyacrylsäureesterdispersion nicht berücksichtigt wird. Die Menge des je 1 Gew.-Teil in der Polyacrylsäureesterdispersion vorhandenen Feststoffes anzuwendenden Vinylchlorids ist abhängig vom Vinylchloridpolymerisationsumsatz und dem angestrebten Polyacrylsäureestergehalt des erfindungsgemäß herzustellenden Polymerisates. Soll beispielsweise ein Polymerisat mit 40 Gew.-% Polyacrylsäureestereinheiten und 60 Gew.-% Vinylchlorideinheiten mit einem Umsatz von 70 Gew.-% hergestellt werden, so sind je 1 Gew.-Teil Feststoff in der Polyacrylsäureesterdispersion $0,6 \times 0,4^{-1} \times 0,7^{-1}$ = 2,14 Gew.-Teile monomeres Vinylchlorid zu verwenden.

Neben Vinylchlorid können bei der Suspensionspolymerisation bis zu 10 Gew.-% der Gesamtmenge der eingesetzten Monomeren mit Vinylchlorid copolymerisierbarer Monomerer angewendet werden. Hierfür sind beispielsweise eines oder mehrere folgender Monomerer geeignet: Vinylester von geradkettigen oder verzweigten Carbonsäuren mit 2 bis 20, vorzugsweise 2 bis 4 Kohlenstoffatomen, wie Vinylacetat, -propionat, -butyrat, -2-ethylhexoat; Vinylisotridecansäureester; Vinylidenchlorid; Vinylether; ungesättigte Säuren, wie Malein-, Fumar-, Acryl-, Methacrylsäure und deren Mono- beziehungsweise Diester mit aliphatischen Alkoholen mit 1 bis 10 Kohlenstoffatomen; Maleinsäureanhydrid, Maleinsäureimid sowie dessen N-Substitutionprodukte mit aromatischen, cycloaliphatischen sowie gegebenenfalls verzweigten aliphatischen Substituenten; Acrylnitril; Styrol. Besonders bevorzugt als Comonomere sind Vinylacetat und Methacrylsäureester mit 1 bis 8 C-Atomen in der alkoholischen Komponente.

Als Suspendiermittel werden 0,05 bis 1 Gew.-%, vorzugsweise 0,1 bis 0,5 Gew.-%, bezogen auf das (die) bei der Suspensionspolymerisation eingesetzte(n) Monomere(n) verwendet. Geeignet sind eines oder mehrere der folgenden Suspendiermittel: Cellulosederivate, wie Alkyl- und Hydroxyalkylcellulosen; beispielsweise Methyl- oder Ethylcellulose sowie Hydroxyethyl- oder Hydroxypropylcellulose sowie deren Mischether, wie Hydroxypropylmethylcellulose; Alkylvinylether-Maleinsäurecopolymerisate; Gelatine; Stärkeether. Bevorzugt wird als Suspendiermittel mindestens die Hälfte der insgesamt einzusetzenden Suspendiermittelmenge von mindestens einem Polyvinylalkohol der 5 bis 25 Gew.-% Acetatgruppen enthält sowie gemessen in 4 gew.-%iger wäßriger Lösung bei 20 °C, eine Viskosität von 4 bis 30 mPa . s aufweist, eingesetzt, wobei der pH-Wert der vor der Polymerisation erzeugten Mischung aus Wasser, Suspendiermittel und Fällungsmittel für die bei der Emulsionspolymerisation des Acrylsäurealkylesters eingesetzten Emulgatoren auf einen Wert unterhalb 9 eingestellt wird.

Die Suspensionspolymerisation wird in Gegenwart von 0,001 bis 3 Gew.-%, vorzugsweise 0,01 bis 0,3 Gew.-%, bezogen auf eingesetzte(s) Monomere(s), in Vinylchlorid löslicher radikalbildender Katalysatoren durchgeführt. Geeignete Katalysatoren sind beispielsweise Diaryl-, Diacylperoxide, wie Diacetyl-, Acetylbenzoyl-, Di-lauroyl-, Dibenzoyl-, Bis-2,4-dichlorbenzoyl-, Bis-2-methylbenzoyl-peroxid; Dialkylperoxide, wie Di-tertiär-butylperoxid, Perester, wie Tertiär-butylpercarbonat, Tertiär-butylperacetat, Tertiär-butylperoctoat, Tertiär-butylperpivalat; Dialkylperoxy-di-carbonate, wie Diisopropyl-, Diethylhexyl-, Dicyclohexyl-, Diethylcyclohexylperoxy-dicarbonate; gemischte Anhydride von organischen Sulfopersäuren und organischen Säuren, wie Acetylcyclohexylsulfonylperoxid; als Polymerisationskatalysatoren bekannte Azoverbindungen, wie Azoisobuttersäurenitril.

Als Fällungsmittel für die bei der Emulsionspolymerisation des Acrylsäurealkylesters verwendeten Emulgatoren sind beispielsweise Salze von mehrwertigen Metallkationen und/oder Säuren, beispielsweise Salzsäure, Schwefelsäure, Salpetersäure, Zitronensäure, Ameisensäure oder Essigsäure geeignet. Vorzugsweise wird als Fällungsmittel für die Emulgatoren mindestens ein wasserlösliches Erdalkali oder Aluminiumsalz eingesetzt, wobei der pH-Wert der vor der Polymerisation erzeugten Mischung aus Wasser, Suspendiermittel und Fällungsmittel oberhalb 2 so eingestellt wird, daß das Fällungsmittel keine merkliche Hydrolyse zeigt. Beispiele für geeignete bevorzugte Fällungsmittel sind Magnesiumsulfat, Calciumchlorid, Calciumacetat, Bariumchlorid, Bariumnitrat, Aluminiumchlorid und Kaliumaluminiumsulfat (Alaun). Von den Fällungsmitteln werden mindestens so viel eingesetzt wie theoretisch zur vollständigen Ausfällung der verwendeten Emulgatoren notwendig ist, zweckmäßig wird ein geringer Überschuß verwendet.

Wenn bei der oben beschriebenen Suspensionspolymerisation von Vinylchlorid in Gegenwart der vorpolymerisierten Polyacrylsäureesterdispersion der gewünschte Monomerenumsatz erreicht ist, wird der Ansatz abgekühlt, nach üblichen Verfahren von restlichen Monomeren befreit, die wäßrige Flotte, beispielsweise in einer Dekanterzentrifuge, abgetrennt und das feuchte Polymerisat wie üblich, beispielsweise in einem Stromtrockner oder Wirbelbetttrockner, getrocknet.

Werden an die erfindungsgemäß erzeugten Pfropfpolymerisate besondere Anforderungen bezüglich der Lagerstabilität bei erhöhter Temperatur (30 bis 50 °C), beispielsweise in Silos oder in Säcken, die auf Paletten gestapelt sind, gestellt, so wird in einer bevorzugten Ausführungsform der Erfindung ein durch Polymerisation in wäßriger Emulsion nach an sich bekanntem Verfahren hergestellter Vinylchlorid-Polymerisat-Latex, dessen Polymerisat-Anteil einen Glasumwandlungspunkt (Tg) von über 60 °C aufweist, zur Suspension des Acrylsäureester enthaltenden Pfropfpolymerisates vor der Abtrennung der Hauptmenge des Wassers, beispielsweise durch Dekantieren in einer Zentrifuge, gegeben. Der Vinylchlorid-Polymerisat-Latex enthält zweckmäßig 30 bis 50 Gew.-%, bezogen auf den Latex, Feststoff und nicht mehr als 3 Gew.-%, bezogen auf den Feststoff, an Emulgator(en). Die Zugabemenge des Vinylchlorid-Polymerisat-Latex wird unter Berücksichtigung seines Feststoffgehaltes sowie des Feststoffgehaltes der Suspension des Pfropfpolymerisates so gewählt, daß auf 1 kg Pfropfpolymerisat 0,005 bis 0,1 kg, vorzugsweise 0,01 bis 0,05 kg, Latex-Feststoff vorliegen. Nach der Latex-Zugabe wird die Mischung zweckmäßig noch einige Zeit gerührt, dann wie üblich dekantiert und getrocknet.

Das Verfahren der Zugabe von Vinylchlorid-Polymerisat-Latex wird insbesondere bei hohen Acrylsäureester-Gehalten, beispielsweise 45 bis 60 Gew.-% polymerisierte Einheiten Acrylsäureester, im Pfropfpolymerisat vorteilhaft angewandt. Es werden Polymerisatpulver erhalten, die auch unter ungünstigen Lagerbedingungen nicht verkleben.

Das erfindungsgemäß hergestellte Polymerisat wird vorzugsweise in Mischung mit Vinylchlorid-homo- und/oder -copolymerisaten, die neben polymerisierten Vinylchlorideinheiten bis zu 10 Gew.-% polymerisierte Einheiten von Comonomeren enthalten unter Zusatz üblicher Verarbeitungshilfsmittel, wie Thermostabilisatoren, Gleitmittel, gegebenenfalls Farbstoffe, Pigmente und andere Zusatzstoffe durch Extrudieren, Kalandrieren im Spritzgußverfahren oder nach anderen bekannten Verarbeitungsverfahren zu Formkörpern verarbeitet. Die Mischung der verschiedenen Polymerisate wird dabei zweckmäßig so eingestellt, daß sie 2,5 bis 10 Gew.-%, bevorzugt 4 bis 7 Gew.-%, des in dem erfindungsgemäß hergestellten Polymerisat enthaltenen Acrylsäureester-Elastomeren (Acrylsäureesterepolymerisat) aufweist.

Wie bereits eingangs erwähnt, ermöglicht es das erfindungsgemäße Verfahren vergleichsweise weniger störanfällig Polymere in gleichmäßiger Qualität mit guter Raum-Zeit-Ausbeute herzustellen. Die erzeugten Polymerisate haben hohe Schüttgewichte und vergleichsweise gute Porosität, wodurch restliche Monomere leicht aus ihnen zu entfernen sind. Die erfindungsgemäß hergestellten Polymere zeigen verbesserte Verarbeitbarkeit und ergeben Formkörper die gute Schlagzähigkeit und gute Oberfläche aufweisen.

Beispiele:

Nachfolgende Ausführungsbeispiele sollen die Erfindung näher erläutern. Die angegebenen Eigenschaftswerte wurden wie folgt ermittelt:

| K-Wert: | Nach DIN 53726 |
|---|---|
| Schüttgewicht: | Nach DIN 53468 |
| Rieselfähigkeit: | Nach DIN 53492 |
| Weichmacheraufnahme: | Nach DIN 53417 |
| Kornverteilung: | Mit Luftstrahl-Siebanalyse nach DIN 53734 |
| Schlagzähigkeit: | Nach DIN 53453 mit gekerbtem Probekörper bei 23 °C ($aK_{23}$) und bei 0 °C ($aK_0$) |
| Oberflächenqualität: | Visuell nach folgender Notenskala: 1 = sehr gut; 2 = gut; 3 = befriedigend |
| Rest-Vinylchlorid-Gehalt im Polymeren: | Gaschromatographisch nach der "head-space"-Methode (Zeitschrift für analytische Chemie 255 (1971), Seiten 345 bis 350) |
| Teilchengröße in der in wäßriger Emulsion hergestellten Polyacrylsäureesterdispersion: | Mit dem "Nanosizer" der Firma Coulter Electronics, Krefeld |

Lagerstabilität:

Folgende Einrichtung wird verwendet:
Eine waagrechte Platte ist mit senkrecht stehenden, oben geschlossenen zylindrischen Erhebungen, die einen Durchmesser von 4 cm und eine Höhe von 4 cm aufweisen, versehen. Auf die Platte werden Hülsen von 4 cm Innendurchmesser und 15 cm Länge senkrecht so aufgesetzt, daß die Erhebungen in die Hülsen eindringen und diesen Halt gewähren. In jede Hülse werden 60 g des zu prüfenden Polymerisat-Pulvers gegeben und darauf ein vollzylindrischer Metallstempel von 3,95 cm Durchmesser, 23 cm Länge und einem Gewicht von 2,2 kg gesetzt. Der Stempel übt einen Druck von 17,6 kN/m$^2$ aus. Diese Anordnung wird während 72 Stunden bei 60 °C gehalten, dann auf Raumtemperatur abgekühlt, die Hülse von der Platte genommen, wenn erforderlich, das Polymerisat mit dem Metallstempel vorsichtig aus der Hülse gedrückt und nach folgender Notenskala beurteilt

1) Das Polymerisat fließt ohne Nachhilfe aus der Hülse und enthält keine Klumpen
2) Das Polymerisat enthält Klumpen, die jedoch auf leichten Fingerdruck zu Pulver zerfallen
3) Das Polymerisat bildet einen zusammenhängenden zylindrischen Körper, der jedoch auf leichten Fingerdruck zu Pulver, gegebenenfalls mit kleinen Agglomeraten, zerfällt
4) Das Polymerisat bildet einen kompakten zylindrischen Körper, der auf Fingerdruck nicht zerfällt.

Zur weiteren Abstufung von 4) wird die Bruchfestigkeit des zylindrischen Polymerisat-Körpers wie folgt gemessen:
Der Polymerisat-Körper wird mit waagerechter Zylinderachse auf zwei halbkreisförmig ausgefräste Lagerböcke von je 1 cm Dicke gelegt, die in 3,6 cm Abstand voneinander entfernt angeordnet sind. In die Mitte zwischen den Lagerböcken wird über den Polymerkörper ein halbkreisförmiger Metallring gelegt, an dessen äußeren Enden an Schnüren ein Kunststoffbehälter von 3 dm$^3$ Inhalt so angebracht ist, daß er mit der Öffnung nach oben unter dem Polymerkörper hängt. Der Metallring hat einen Innendurchmesser von 4 cm, einen Außendurchmesser von 7 cm und einen trapezförmigen Querschnitt (Innenfläche 3 mm breit; Außenfläche 10 mm breit). Zur Messung wird aus einem kalibrierten Gefäß Wasser so lange in den Behälter gelassen, bis der Polymerisat-Körper durchbricht. Aus der Wassermenge, dem bekannten Leergewicht des Behälters, der Aufhängung und des Metallringes wird die Bruchfestigkeit in kN/m$^2$ Querschnittsfläche des Polymerkörpers ermittelt. Des Wert ist in der Tabelle weitere unten in Klammern nach der Note 4 vermerkt.

Beispiel 1

Es werden folgende Flüssigkeiten hergestellt:

6

Monomeremulsion:

| vollentsalztes Wasser | 53 kg |
|---|---|
| n-Butylacrylat | 139 kg |
| Diallylphthalat | 0,52 kg |
| Natriumsalz der Dodecylbenzolsulfonsäure | 0,53 kg |
| Ammoniumlaurat | 2,5 kg |

Diese Monomeremulsion enthält:
0,374 Gew.-% einer Verbindung mit zwei nicht konjugierten ethylenischen Doppelbindungen (Diallylphthalat), bezogen auf die Acrylsäureester, enthaltende Monomerenmischung.

Emulgatorlösung:

| vollentsalztes Wasser | 4,0 kg |
|---|---|
| Ammoniumlaurat | 1,4 kg |

Initiatorlösung I:

| vollentsalztes Wasser | 7,5 kg |
|---|---|
| Ammoniumpersulfat | 0,38 kg |
| $Na_2S_2O_5$ | 0,04 kg |

Initiatorlösung II:

| vollentsalztes Wasser | 2,5 kg |
|---|---|
| Ammoniumpersulfat | 0,115 kg |
| $Na_2S_2O_5$ | 0,022 kg |

Aus einem Polymerisationskessel von 300 dm$^3$ Inhalt mit Rührer wird der Luftsauerstoff mit Stickstoff verdrängt und dann werden eindosiert:

| vollentsalztes Wasser | 74 kg |
|---|---|
| Monomeremulsion | 0,8 kg |
| Natriumsalz der Dodecylbenzolsulfonsäure | 0,07 kg |
| Ammoniak | 0,083 kg |
| $Na_2S_2O_5$ | 0,017 kg |
| Ammoniumpersulfat | 0,165 kg |

Die Mischung wird unter Rühren auf 70 °C erwärmt.
5 Minuten später wird mit der kontinuierlichen Dosierung des Restes der Monomeremulsion und der Initiatorlösung I begonnen und während 3,5 Stunden fortgeführt. Dann wird die Emulgatorlösung zugegeben und nach Zugabe der Initiatorlösung II während 2 Stunden weitergerührt, danach abgekühlt.
Es werden folgende Werte ermittelt:
Umsatz > 99,9 % Feststoffgehalt der Dispersion 50,2 Gew.-%
Teilchengröße 170 nm
Der pH-Wert der Mischung liegt am Beginn der Polymerisation über 9.

Insgesamt werden 2,7 Gew.-% Ammoniumlaurat, bezogen auf acrylsäureesterhaltige Monomerenmischung, eingesetzt. Je 1 Gew.-Teil des Natriumsalzes der Dodecylbenzolsulfonsäure werden 6,5 Gew.-Teile Ammoniumlaurat verwendet.

Für die nachfolgende Suspensionspolymerisation werden in einen Polymerisationskessel mit 400 dm$^3$ Inhalt, der mit einem Rührer und temperierbarem Doppelmantel ausgerüstet ist, eindosiert:

| | |
|---|---|
| vollentsalztes Wasser | 165 kg |
| Polyvinylalkohol mit 15,7 Gew.-% Acetatgruppen und einer Viskosität der 4 gew.-%igen wäßrigen Lösung bei 20 °C von 15 mPa . s | 0,23 kg |
| Methylhydroxypropylcellulose mit einer Viskosität der 2 gew.-%igen Lösung bei 20 °C von 100 mPa . s | 0,038 kg |
| Lauroylperoxid | 0,061 kg |
| Calciumnitrat | 0,76 kg |
| wäßrige Salpetersäure mit 65 Gew.-% HNO$_3$ | 0,175 kg |

Der pH-Wert dieser Mischung beträgt 2,3.

Der Polymerisationskessel wird nun geschlossen, dar darin enthaltene Luftsauerstoff verdrängt und bei einer Rührerdrehzahl von 150 Umdrehungen pro Minute 76 kg Vinylchlorid eindosiert. Anschließend werden 84 kg der wie oben hergestellten Polyacrylsäureesterdispersion zugegeben, danach der Mantel des Polymerisationskessels auf 65 °C aufgeheizt und bei dieser Temperatur bis zu einem Vinylchloridrestdruck von 5 bar gehalten. Nun wird abgekühlt und die entstandene Polymerdispersion nach üblichem Verfahren von restlichen Monomeren befreit.

In der eingesetzten Polyacrylsäureesterdispersion sind 0,154 kg Natriumsalz der Dodecylbenzolsulfonsäure enthalten, das sind, bezogen auf eingesetztes Vinylchlorid, 0,2 Gew.-%. Der Vinylchloridumsatz zum Polymeren beträgt 70 Gew.-%, der Polyacrylsäureestergehalt des erzeugten Polymeren beträgt 45 Gew.-%. Nach Abschluß der Polymerisation hat sich keinerlei Kesselbelag gebildet.

Die Suspension wird in drei gleiche Teile geteilt. Dem ersten Teil werden 400 g eines 40 Gew.-% Feststoff enthaltenden Vinylchlorid-Polymerisat-Latex, der, bezogen auf den Feststoff, 1,1 Gew.-% Ammoniumlaurat und 1,3 Gew.-% Natriumlaurylsulfat enthält und dessen Polymerisat-Anteil einen Glasumwandlungspunkt (Tg) von 80 °C aufweist, zugesetzt, das sind je 1 kg des Acrylsäureester enthaltenden Pfropfpolymerisates 0,005 kg Latex-Feststoff (Probe 1a). Dem zweiten Teil werden 2 400 g des vorher beschriebenen Vinylchlorid-Polymerisat-Latex zugesetzt, das sind je 1 kg des Acrylsäureester enthaltenden Pfropfpolymerisates 0,03 kg Latex-Feststoff (Probe 1b). Der dritte Teil erhält keine Zusätze (Probe 1). Dieser dritte Teil wird sofort, der erste und zweite Teil nach 10 min Rühren von der Hauptmenge der wäßrigen Flotte abdekantiert und das feuchte Polymere getrocknet. An allen 3 Proben, wie auch an dem gemäß nachfolgend beschriebenen Vergleichsversuch A hergestellten Polymeren, wird die Lagerstabilität bestimmt. Die ermittelten Werte sind in nachfolgender Tabelle I aufgeführt:

Tabelle I

| | Note | Lagerstabilität (Bruchfestigkeit kN/m$^2$) |
|---|---|---|
| Vergleichsversuch A*) | 4 | (25) |
| Beispiel 1 Probe 1 | 3 | - |
| Beispiel 1 Probe 1a | 2 | - |
| Beispiel 1 Probe 1b | 1 | - |

*) Angaben über die Herstellung des Polymeren siehe später

Das wie oben beschriebene, erfindungsgemäß hergestellte Polymerisat wird mit einem Extruder DS 85 der Firma Weber zu Profilformkörpern mit folgender Rezeptur verarbeitet: 85 Gew.-Teile Suspensionshomopolymerisat vom K-Wert 68

15 Gew.-Teile erfindungsgemäß hergestelltes Acrylsäureester-Vinylchloridpolymerisat

2,0 Gew.-Teile Barium/Cadmium-Laurat

0,5 Gew.-Teile organisches Bleiphosphit

0,3 Gew.-Teile Oxystearinsäure

0,5 Gew.-Teile neutrale Dicarbonsäureester gesättigter Fettalkohole (Tropfpunkt 42 bis 46 °C)
1,0 Gew.-Teile epoxidiertes Sojabohnenöl
0,5 Gew.-Teile Paraffin-Kohlenwasserstoffe (Erweichungspunkt 54 °C)
7 Gew.-Teile gefälltes Calciumcarbonat
4 Gew.-Teile Titandioxid.

Während der Extrusion wird die Stromaufnahme des Extruders als ein Maß für die Verarbeitbarkeit der Mischung gemessen.

Die nach Differential-Thermoanalyse gemessene Glasumwandlungstemperatur des durch Emulsionspolymerisation hergestellten Acrylsäurebutylesterpolymerisates liegt bei -40 °C.

Die am Acrylsäureester-Vinylchloridpolymerisat und dem daraus hergestellten Profilformkörper gemessenen Eigenschaften sind in nachfolgender Tabelle II aufgeführt.

Vergleichsversuch A:

Es wird verfahren wie in Beispiel 1, jedoch wird bei der Emulsionspolymerisation des Butylacrylats anstelle der insgesamt 0,6 kg des Natriumsalzes der Dodecylbenzolsulfonsäure (HLB-Wert circa 20) die gleiche Menge Natriumlaurylsulfat (HLB-Wert über 40) eingesetzt. Bei der Emulsionspolymerisation wird ein Umsatz von 99,9 % erzielt, die erzeugte wäßrige Polyacrylsäureesterdispersion hat einen Feststoffgehalt von 49,7 %, die Teilchengröße des Feststoffs beträgt 150 nm.

Die nachfolgende Suspensionspolymerisation wird, wie in Beispiel 1 beschrieben, durchgeführt. Der Vinylchloridumsatz beträgt 70 Gew.-%, bezogen auf eingesetztes monomeres Vinylchlorid, das erzeugte Acrylsäureester-Vinylchloridcopolymerisat weist einen Acrylsäureestergehalt von 45 Gew.-%, bezogen auf das Polymere, auf. Die Verarbeitung zum Profilformkörper erfolgt wie bei Beispiel 1 beschrieben. Die am Acrylsäureester-Vinylchloridpolymerisat und dem daraus hergestellten Profilformkörper gemessenen Werte sind in nachfolgender Tabelle II aufgeführt.

Beispiel 2

Es wird gearbeitet wie in Beispiel 1 beschrieben, jedoch wird für die Emulsionspolymerisation des Acrylsäureesters aus folgenden Stoffen eine Monomeremulsion bereitet:

| | |
|---|---|
| vollentsalztes Wasser | 53 kg |
| 2-Ethylhexylacrylat | 139 kg |
| Butandioldiacrylat | 1,0 kg |
| Natriumsalz eines n-Alkansulfonsäuregemisches mit verschiedenen Kettenlängen von $C_{12}$ bis $C_{16}$ mit einem überwiegendem Gehalt an $C_{14}$ | 0,42 kg |
| Ammoniumlaurat | 2,5 kg |

Im Polymerisationskessel werden die in Beispiel 1 angegebenen Mengen vorgelegt, jedoch werden anstelle 0,07 kg Natriumsalz der Dodecylbenzolsulfonsäure 0,08 kg des oben beschriebenen Natriumsalzes des n-Alkansulfonsäuregemisches eingesetzt.

Nach Beendigung der Polymerisation beträgt der Umsatz 99,9 %, die erzeugte Polyacrylsäureesterdispersion weist einen Feststoffgehalt von 50 Gew.-% und eine Feststoffteilchengröße von 155 nm auf. Die Glasumwandlungstemperatur des erzeugten Polymeren, gemessen mit Differential-Thermoanalyse, beträgt -40 °C. Es werden 2,6 Gew.-% Ammoniumlaurat, bezogen auf das acrylsäureesterhaltige Monomerengemisch, eingesetzt, je 1 Gew.-Teil Natriumsalz des n-Alkansulfonsäuregemisches werden 7,8 Gew.-Teile Ammoniumlaurat verwendet. Das acrylsäureesterhaltige Monomerengemisch enthält 0,67 Gew.-%, bezogen auf das Gemisch, einer Verbindung mit 2 ethylenisch ungesättigten, nicht konjugierten Doppelbindungen.

Die nachfolgende Suspensionspolymerisation wird wiederum durchgeführt wie in Beispiel 1 beschrieben, wobei folgende Stoffmengen eingesetzt werden:

| | |
|---|---|
| vollentsalztes Wasser | 140 kg |
| Vinylchlorid | 100 kg |
| Polyvinylalkohol mit 21,6 Gew.-% Acetatgruppen und einer Viskosität, gemessen in 4 gew.-%iger wäßriger Lösung bei 20 °C,von 5 mPa . s | 0,2 kg |
| Methylhydroxyethylcellulose mit einer Viskosität,gemessen in 2 gew.-%iger wäßriger Lösung bei 20 °C,von 400 mPa . s | 0,04 kg |
| Copolymerisat von Vinylether und Maleinsäureanhydrid (Gantrez® 169, der Firma General Aniline and Film Corporation, USA) | 0,1 kg |
| Lauroylperoxid | 0,08 kg |
| Aluminiumsulfat | 0,5 kg |
| Salpetersäure (65 Gew.-% HNO$_3$) | 0,175 kg |
| wie oben beschrieben hergestellte Poly-2-ethylhexylacrylatdispersion | 94 kg |

Nach Beendigung der Polymerisation beträgt der Vinylchloridumsatz 70 %, das erzeugte Polymere weist einen Acrylsäureestergehalt von 40 Gew.-% auf. Bezogen auf eingesetztes Vinylchlorid werden bei der Emulsionspolymerisation 0,14 Gew.-% des Natriumsalzes des n-Alkansulfonsäuregemisches verwendet.

Die Eigenschaften des so hergestellten Acrylsäureester-Vinylchloridpolymerisates und des daraus, wie in Beispiel 1 beschrieben, hergestellten Profilformkörpers sind aus nachstehender Tabelle II ersichtlich.

Beispiel 3

Es wird wiederum gearbeitet wie in Beispiel 1 beschrieben, bei der Emulsionspolymerisation wird folgende Monomeremulsion verwendet:

| | |
|---|---|
| vollentsalztes Wasser | 53 kg |
| 2-Ethylhexylacrylat | 53 kg |
| Allylmethacrylat | 0,5 kg |
| Vinylidenchlorid | 86 kg |
| Natriumsalz der Dodecylbenzolsulfonsäure | 0,52 kg |
| Ammoniumlaurat | 2,5 kg |

Nach Beendigung der Polymerisation beträgt der Umsatz mehr als 99,9 %, der Feststoffgehalt der erzeugten Dispersion des Copolymeren aus 2-Ethylhexylacrylat und Vinylidenchlorid beträgt 50 Gew.-%, die Teilchengröße des Feststoffs 150 nm. Das Copolymerisat weist einen Vinylidenchloridgehalt von 61,6 Gew.-% und, gemessen mit Differential-Thermoanalyse, eine Glasumwandlungstemperatur von -17 °C auf. Bezogen auf acrylsäureesterhaltiges Monomerengemisch werden 2,7 Gew.-% Ammoniumlaurat verwendet. Das Monomerengemisch enthält 0,35 Gew.-%, bezogen auf das Gemisch, von einer Verbindung von 2 ethylenisch ungesättigten, nicht konjugierten Doppelbindung. Je 1 Gew.-Teil Natriumsalz der Dodecylbenzolsulfonsäure werden 6,6 Gew.-Teile Ammoniumlaurat verwendet.

Die nachfolgende Suspensionspolymerisation wird erneut, wie im Beispiel 1 beschrieben, durchgeführt, wobei folgende Stoffmengen eingesetzt werden:

| | |
|---|---|
| vollentsalztes Wasser | 41 kg |
| Vinylchlorid | 100 kg |
| Polyvinylalkohol mit 15,7 Gew.-% Acetatgruppen und einer Viskosität, gemessen in 4 gew.-%iger wäßriger Lösung bei 20 °C,von 15 mPa . s | 0,075 kg |
| Methylhydroxypropylcellulose mit einer Viskosität,gemessen in 2 gew.-%iger wäßriger Lösung bei 20 °C,von 50 mPa . s | 0,15 kg |
| Sorbitanmonolaurat | 0,2 kg |
| Azo-isobutyronitril | kg |
| Calciumchlorid | 0,4 kg |
| Zitronensäure | 0,3 kg |
| wie oben näher beschriebene hergestellte Dispersion des Copolymerisats aus 2-Ethylhexylacrylat und Vinylidenchlorid | 84 kg |

Nach Beendigung der Polymerisation beträgt der Umsatz, bezogen auf Vinylchlorid, 80 Gew.-%. Das erzeugte Polymere weist einen Gehalt an 2-Ethylhexylacrylat Einheiten von 13,1 Gew.-% und von Vinylidenchlorid Einheiten von 21,4 Gew.-% auf. Bezogen auf Vinylchlorid wurden bei der Emulsionspolymerisation des Acrylsäureestermonomerengemisches 0,15 Gew.-% des Natriumsalzes der Dodecylbenzolsulfonsäure verwendet.

Die Eigenschaften des Acrylsäureester-Vinylidenchlorid-Vinylchloridpolymerisatesund des daraus, wie in Beispiel 1 beschrieben, hergestellten Profilformkörpers sind aus nachstehender Tabelle II ersichtlich.

## Tabelle II

Eigenschaften der Acrylsäureester-Vinylchlorid-Polymerisate und der daraus hergestellten Profilformkörper:

### Polymeres

| Beispiel/ Vergleichs- versuch | Acrylsäure- estergehalt Gew.-% | Schütt- gewicht g/dm³ | Riesel- fähigkeit s | Weichmacher- aufnahme % | Korngröße | | | | Rest- Vinylchlorid Tpm [+)] |
|---|---|---|---|---|---|---|---|---|---|
| | | | | | <63 μm | <125 μm | <250 μm | <500 μm | |
| A | 45 | 615 | 32 | 2,1 | 82 | 44 | 15 | 2 | 54 |
| 1 | 45 | 580 | 17 | 12 | 100 | 60 | 12 | 0 | < 1 |
| 2 | 40 | 560 | 15 | 14 | 100 | 75 | 17 | 0 | n.b. |
| 3 | 13,1 [4)] | 580 | 21 | 10,5 | 100 | 43 | 2 | 0 | n.b. |

### Profilformkörper

| Beispiel/ Vergleichs- versuch | S-PVC Gew.-T. [1)] | Poly ACE-VC Gew.-T. [2)] | Poly ACE- Gehalt Gew.-% [3)] | Schlagzähigkeit kJ/m² | | Profil-Ober- fläche Note | Extruder-Strom- Aufnahme (A) |
|---|---|---|---|---|---|---|---|
| | | | | $aK_{23}$ | $aK_0$ | | |
| A | 85 | 15 | 6,75 | 19 | 5 | 3 | 18 |
| 1 | 85 | 15 | 6,75 | 54 | 12 | 1 bis 2 | 14 |
| 2 | 87,5 | 12,5 | 5 | 41 | 11 | 1 | 13 |
| 3 | 81,5 | 18,5 | 6,38 | 48 | 10 | 2 | 12 |

Fußnoten zu der Tabelle II:

+) Gewichtsteile je 1 000 000 Gewichtsteile Polymeres

1) Suspensions-Vinylchlorid-Homopolymerisat

2) Acrylsäureester-Vinylchlorid-Polymerisat

3) Gehalt der Polymeren-Mischung an Polyacrylsäureester beziehungsweise Polyacrylsäureester-Vinylidenchlorid-Copolymerisat (Beispiel 3)

4) dazu 21,4 Gew.-% polymerisierte Vinylidenchlorid-Einheiten, insgesamt 34,5 Gew.-% Acrylsäureester-Vinylidenchlorid-Copolymerisat

n.b. = nicht bestimmt

**Patentansprüche**

1. Verfahren zur Herstellung eines Polymerisates, das polymerisierte Einheiten des Vinylchlorids und 30 bis 60 Gew.-%, bezogen auf das Polymerisat, polymerisierte Einheiten mindestens eines Acrylsäureesters sowie gegebenenfalls weiterer mit Acrylsäureester copolymerisierbarer Monomerer enthält, durch Polymerisation des Acrylsäureesters und gegebenenfalls weiterer Monomerer unter Zusatz eines Monomeren mit mindestens zwei ethylenisch ungesättigten, nicht konjugierten Doppelbindungen in wäßriger Emulsion, in Gegenwart eines wasserlöslichen Salzes einer 12 bis 18 C-Atome enthaltenden Fettsäure als Emulgator mit einem Ausgangs-pH-Wert über 9, wobei ein Polymeres gebildet wird, dessen Glasumwandlungstemperatur unterhalb 0 °C liegt, mit anschließender Polymerisation von Vinylchlorid, gegebenenfalls zusammen mit Vinylchlorid copolymerisierbaren Monomeren in wäßriger Suspension in Gegenwart der durch Emulsionspolymerisation erzeugten Polyacrylsäureesterdispersion, sowie von mindestens einem radikalbildenden, in Vinylchlorid löslichen Katalysator, mindestens einem Suspendiermittel und mindestens einem Fällungsmittel für den genannten Emulgator bei Temperaturen von 50 bis 80 °C, Abkühlen, Entspannen und Aufarbeiten zum trockenen Polymerisat, dadurch gekennzeichnet, daß die Emulsionspolymerisation des Acrylsäureesters zusätzlich in Gegenwart mindestens eines Alkali- oder Ammoniumsalzes einer Alkylsulfonsäure mit 8 bis 20 C-Atomen und/oder einer Alkylarylsulfonsäure mit 3 bis 16 C-Atomen im Alkylrest als weiterem Emulgator vorgenommen wird und vor Beginn der Suspensionspolymerisation des Vinylchlorids Wasser, Suspendiermittel, Fällungsmittel für die genannten Emulgatoren, Katalysator, gegebenenfalls weitere Zusatzsstoffe sowie Vinylchlorid und gegebenenfalls weitere Monomere im Polymerisationsgefäß vorgelegt werden und danach die vorher erzeugte Dispersion des Polyacrylsäureesters zugegeben und die Mischung auf Polymerisationstemperatur erwärmt wird.

2. Verfahren nach Anspruch 1, dadurch gekennzeichnet, daß als Fällungsmittel für die Emulgatoren mindestens ein wasserlösliches Erdalkali oder Aluminiumsalz eingesetzt wird, wobei der pH-Wert der Mischung aus Wasser, Suspendiermittel und Fällungsmittel oberhalb 2 so eingestellt wird, daß das Fällungsmittel keine merkliche Hydrolyse zeigt.

3. Verfahren nach Anspruch 1 oder 2, dadurch gekennzeichnet, daß als Suspendiermittel mindestens ein Polyvinylalkohol, der 5 bis 25 Gew.-% Acetatgruppen enthält sowie, gemessen in 4 gew.-%iger wäßriger Lösung, bei 20 °C eine Viskosität von 4 bis 30 mPa . s aufweist, eingesetzt wird, wobei der pH-Wert der Mischung aus Wasser, Suspendiermittel und Fällungsmittel für die Emulgatoren auf einen Wert unterhalb 9 eingestellt wird.

**4.** Verfahren nach einem oder mehreren der Ansprüche 1 bis 3, dadurch gekennzeichnet, daß für die Emulsionspolymerisation ein Acrylsäureester eingesetzt wird, dessen Homopolymerisat eine Glasumwandlungstemperatur von unter -15 °C aufweist.

**5.** Verfahren nach einem oder mehreren der Ansprüche 1 bis 4, dadurch gekennzeichnet, daß für die Emulsionspolymerisation neben Acrylsäureester als copolymerisierbares Monomeres Vinylidenchlorid eingesetzt wird.

**6.** Verfahren nach einem oder mehreren der Ansprüche 1 bis 5, dadurch gekennzeichnet, daß bei der Emulsionspolymerisation neben Acrylsäureester und gegebenenfalls weiterer Monomeren 0,1 bis 5,0 Gew.-%, bezogen auf den Acrylsäureester, von einem Monomeren mit mindestens 2 ethylenisch ungesättigten, nicht konjugierten Doppelbindungen eingesetzt werden.

**7.** Verfahren nach einem oder mehreren der Ansprüche 1 bis 6, dadurch gekennzeichnet, daß dem Polymerisat, das polymerisierte Einheiten des Vinylchlorids und 30 bis 60 Gew.-%, bezogen auf das Polymerisat, polymerisierte Einheiten mindestens eines Acrylsäureesters sowie gegebenenfalls weiterer mit Acrylsäureester copolymerisierbarer Monomerer enthält, vor der Aufarbeitung des Suspensions-Polymerisationsansatzes durch Abtrennen der Hauptmenge der wäßrigen Flotte ein durch Emulsionspolymerisation in wäßriger Flotte hergestellter Vinylchlorid-Polymerisat-Latex, dessen Polymerisat-Anteil einen Glasumwandlungspunkt (Tg) von über 60 °C aufweist, der 30 bis 50 Gew.-%, bezogen auf den Latex, Feststoff und höchstens 3 Gew.-%, bezogen auf den Feststoff, Emulgator(en) enthält, in einer solchen Menge zugesetzt wird, daß auf 1 kg Acrylsäureester enthaltendes Polymerisat 0,005 bis 0,1 kg Latex-Feststoff kommen, danach gerührt, die Polymerisat-Mischung von der Hauptmenge der wäßrigen Flotte getrennt und getrocknet wird.

## Claims

**1.** A process for the preparation of a polymer containing polymerized units of vinyl chloride and 30 to 60% by weight, relative to the polymer, of polymerized units of at least one acrylate or at least one acrylate and further monomers which can be copolymerized with acrylates, by polymerization of the acrylate or of the acrylate and the further monomers mentioned with addition of a monomer containing at least two ethylenically unsaturated, non-conjugated double bonds in aqueous emulsion in the presence of a water-soluble salt of a fatty acid containing 12 to 18 carbon atoms as emulsifier having an initial pH of greater than 9, where a polymer is formed whose glass transition temperature is below 0°C, with subsequent polymerization of vinyl chloride or of vinyl chloride and monomers which can be copolymerized with vinyl chloride, in aqueous suspension in the presence of the polyacrylate dispersion produced by emulsion polymerization, and in the presence of at least one vinyl chloride-soluble catalyst which forms free radicals, at least one suspending agent and at least one precipitant for the emulsifier mentioned, at temperatures from 50 to 80°C, cooling, releasing the pressure and working up to the dry polymer, which comprises carrying out the emulsion polymerization of the acrylate in the additional presence of at least one alkali metal salt or ammonium salt of an alkylsulfonic acid having 8 to 20 carbon atoms and/or of an alkylarylsulfonic acid having 3 to 16 carbon atoms in the alkyl radical as further emulsifier, and introducing water, suspending agent, precipitants for the emulsifiers mentioned, catalyst and vinyl chloride and, if present, further monomers into the polymerization vessel before commencing the suspension polymerization of the vinyl chloride, and then adding the previously produced dispersion of the polyacrylate and warming the mixture to polymerization temperature.

**2.** The process as claimed in claim 1, wherein the precipitant employed for the emulsifiers is at least one water-soluble alkaline earth metal salt or aluminum salt, the pH of the mixture of water, suspending agent and precipitant being adjusted to a value above 2 in a manner such that the precipitant exhibits no notable hydrolysis.

**3.** The process as claimed in claim 1 or 2, wherein the suspending agent employed is at least one polyvinyl alcohol which contains 5 to 25% by weight of acetate groups and has a viscosity of 4 to 30 mPa.s at 20°C, measured in 4% strength by weight aqueous solution, the pH of the mixture of water, suspending agent and precipitant for the emulsifiers being adjusted to a value below 9.

**4.** The process as claimed in one or more of claims 1 to 3, wherein an acrylate whose homopolymer has a glass transition temperature of below -15°C is employed for the emulsion polymerization.

**5.** The process as claimed in one or more of claims 1 to 4, wherein the copolymerizable monomer employed for the emulsion polymerization is vinylidene chloride in addition to acrylate.

**6.** The process as claimed in one or more of claims 1 to 5, wherein, besides acrylate or acrylate and further monomers, 0.1 to 5.0% by weight, relative to the acrylate, of a monomer containing at least 2 ethylenically unsaturated, non-conjugated double bonds are employed in the emulsion polymerization.

**7.** The process as claimed in one or more of claims 1 to 6, wherein, before the suspension polymerization batch is worked up by removing the majority of the aqueous liquor, a vinyl chloride polymer latex prepared in aqueous liquor by emulsion polymerization, whose polymer component has a glass transition point (Tg) of greater than 60°C and which contains 30 to 50% by weight, of solid, relative to the latex, and a maximum of 3% by weight of one or more emulsifiers, relative to the solid, is added to the polymer which contains polymerized units of vinyl chloride and 30 to 60% by weight, relative to the polymer, of polymerized units of at least one acrylate or at least one acrylate and further monomers which can be copolymerized with acrylates, in an amount such that 0.005 to 0.1 kg of latex solid is present per kg of acrylate-containing polymer, the mixture is then stirred, the majority of the aqueous liquor is removed from the polymer mixture, and the latter is dried.

## Revendications

**1.** Procédé de préparation d'un produit de polymérisation comprenant des motifs de chlorure de vinyle avec de 30 à 60%, du poids du polymère, de motifs d'un ou de plusieurs esters de l'acide acrylique et le cas échéant d'autres monomères copolymérisables avec ces esters acryliques, par polymérisation en émulsion aqueuse de l'ester acrylique et le cas échéant d'autres monomères en présence d'un monomère ayant au moins deux doubles liaisons éthyléniques non-conjuguées, en présence comme émulsionnant d'un sel hydrosoluble d'un acide gras ayant de 12 à 18 atomes de carbone et à un pH initial supérieur à 9, ce qui forme un produit polymère dont la température de transition vitreuse est inférieure à 0°C, polymérisation suivie d'une polymérisation de chlorure de vinyle en suspension aqueuse, éventuellement avec des monomères copolymérisables avec le chlorure de vinyle, en présence de la dispersion du polyester acrylique formée par la polymérisation en émulsion ainsi que d'un ou plusieurs catalyseurs générateurs de radicaux libres et solubles dans le chlorure de vinyle, d'un ou plusieurs agents de suspension et d'un ou plusieurs agents de précipitation pour l'émulsionnant indiqué, à des températures de 50 à 80°C, puis refroidissement, détente et traitement pour obtenir le produit polymère sec, procédé caractérisé en ce que l'on effectue en outre la polymérisation en émulsion de l'ester acrylique en présence, comme autre émulsionnant, d'un ou de plusieurs sels de métaux alcalins ou d'ammonium d'un acide alkylsulfonique ayant de 8 à 20 atomes de carbone et/ou d'un acide alkylarylsulfonique dont l'alkyle peut avoir de 3 à 7 atomes de carbone, et avant de commencer la polymérisation en suspension du chlorure de vinyle on ajoute au récipient de polymérisation de l'eau, un agent de mise en suspension et un agent de précipitation pour les émulsionnants indiqués, un catalyseur, éventuellement d'autres additifs ainsi que du chlorure de vinyle et le cas échéant d'autres monomères, puis on ajoute la dispersion préalablement obtenue du polyester acrylique et on porte le mélange à la température de polymérisation.

**2.** Procédé selon la revendication 1, caractérisé en ce que l'on ajoute comme agents de précipitation pour les émulsionnants un ou plusieurs sels hydrosolubles de métaux alcalino-terreux ou d'aluminium, en réglant au-dessus de 2 le pH du mélange d'eau, de l'agent de suspension et de l'agent de précipitation pour que ce dernier ne présente aucune hydrolyse notable.

**3.** Procédé selon la revendication 1 ou 2, caractérisé en ce que l'on ajoute comme agent de mise en suspension un ou plusieurs polyalcools vinyliques comportant de 5 à 25% en poids de groupes d'acétate et ayant une viscosité de 4 à 30 mPa.s, mesurée en solution aqueuse à 4% en poids à la température de 20°C, tout en réglant au-dessous de 9 le pH du mélange d'eau, de l'agent de suspension et de l'agent de précipitation pour les émulsionnants.

**4.** Procédé selon une ou plusieurs des revendications 1 à 3, caractérisé en ce que l'on prend pour la polymérisation en émulsion un ester de l'acide acrylique dont l'homopolymère a une température de transition vitreuse inférieure à -15°C.

**5.** Procédé selon une ou plusieurs des revendications 1 à 4, caractérisé en ce que l'on effectue la polymérisation en émulsion avec également du chlorure de vinylidène comme monomère copolymérisable, en plus de l'ester acrylique.

**6.** Procédé selon une ou plusieurs des revendications 1 à 5, caractérisé en ce que pour la polymérisation en émulsion, avec l'ester acrylique et le cas échéant d'autres monomères, on utilise en outre de 0,1 à 5,0%, du poids de l'ester acrylique, d'un monomère ayant au moins deux doubles liaisons éthyléniques non-conjuguées.

**7.** Procédé selon une ou plusieurs des revendications 1 à 6, caractérisé en ce que l'on ajoute au produit de polymérisation comportant les motifs de chlorure de vinyle et de 30 à 60%, du poids du polymère, de motifs d'un ou plusieurs esters acryliques ainsi que le cas échéant d'autres monomères copolymérisables avec les esters acryliques, avant de procéder au traitement du mélange de polymérisation en suspension par séparation de la majeure partie du bain aqueux, un latex de polymére de chlorure de vinyle formé par une polymérisation en émulsion en bain aqueux, dont la partie de polymère donne un point de transition vitreuse (Tg) supérieur à 60°C et contenant de 30 à 50%, du poids du latex, de matière solide, et au plus 3%, du poids de matière solide, d'un ou de plusieurs émulsionnants, dans une proportion donnant de 0,005 à 0,1 kg de matière solide du latex par kg du polymère comprenant l'ester acrylique, puis on agite le mélange, on en sépare la majeure partie du bain aqueux et on le sèche.